# EUROPEAN PATENT SPECIFICATION

(11) **EP 4 148 888 B1**
(45) Date of publication and mention of the grant of the patent: **21.05.2025**
(21) Application number: 21886771.1
(22) Date of filing: 26.10.2021
(51) Int. Cl.: H01M 50/30, H01M 50/35, H01M 50/20, H01M 50/103, H01M 10/052, H01M 50/14, H01M 50/141

(54) **PACK HOUSING INCLUDING INTEGRATED FILTER MESH APPLIED TO VENTING HOLE, AND BATTERY PACK INCLUDING THE SAME**
PACKGEHÄUSE MIT INTEGRIERTEM FILTERNETZ FÜR ENTLÜFTUNGSLOCH UND BATTERIEPACK DAMIT
BOÎTIER DE BLOC AYANT UN TREILLIS DE FILTRE INTÉGRÉ APPLIQUÉ À UN TROU D'AÉRATION ET BLOC-BATTERIE COMPRENANT CELUI-CI

(30) Priority: 27.10.2020 KR 20200140699
(43) Date of publication of application: 15.03.2023
(73) Proprietor: LG Energy Solution, Ltd., Seoul 07335 (KR)
(72) Inventor: LIM, Jae-Bum, Daejeon 34122 (KR); LEE, Bum-Hyun, Daejeon 34122 (KR)
(74) Representative: Plasseraud IP
(86) International application number: PCT/KR2021/015137
(87) International publication number: WO 2022/092777

(56) References cited:
- WO-A1-2013/008366
- CN-A- 103 824 987
- CN-A- 108 352 472
- CN-U- 209 434 353
- JP-A- 2009 212 081
- JP-A- 2009 212 081
- KR-A- 20120 128 473
- KR-A- 20150 061 200
- US-A- 3 904 441
- US-A1- 2010 227 544
- US-A1- 2019 260 059
- US-B2- 10 784 478

## Description

### TECHNICAL FIELD

The present disclosure relates to pack housings, and more particularly, to a pack housing including an integrated filter mesh that can reduce man-hours and satisfy waterproof and dustproof performance when assembled to a venting hole for gas discharge, and a battery pack including the pack housing.

The present application claims priority to Korean Patent Application No. 10-2020-0140699 filed on October 27, 2020 in the Republic of Korea.

### BACKGROUND ART

An energy storage system (ESS) battery pack is equipped with secondary battery cells to store power during a day time and can take out and use the power when needed. For example, the ESS battery pack is a form of storing electricity generated using solar panels or wind power generation in secondary battery cells and then taking out and use the electricity.

The size and weight of the ESS battery pack can be configured differently depending on its storage capacity. For example, an ESS battery pack for home use may be provided in a rectangular box shape of approximately 120 × 80 × 20 cm (height × width × thickness), and may be provided to be installed on a wall or a pole indoors or outdoors by using a bracket or the like.

When overcharging occurs in a secondary battery cell during charging/discharging or an internal short circuit occurs due to any factor in the secondary battery cell, the temperature of the secondary battery cell increases and gas is generated through a chemical reaction and may leak from the secondary battery cell. The ESS battery pack includes a venting hole to discharge the gas to the outside. The venting hole is generally provided in a lower surface or upper surface of a pack housing.

Because the ESS battery pack is a product subject to safety certification, an Ingress Protection (IP) rating equal to or greater than a certain level is required. Accordingly, a waterproof and dustproof unit is applied to the venting hole to prevent moisture or foreign substances from entering the pack housing through the venting hole in normal times.

As an example of the waterproof and dustproof unit according to the conventional art, a fiber filter is disposed between two meshes of a size corresponding to the venting hole. However, as a thick fiber filter is disposed between the two meshes to satisfy the IP rating, the thickness of the waterproof and dustproof unit increases, and it is difficult to align and assemble each of the meshes and the fiber filter to fit to the venting hole.

An example of battery pack is disclosed in US 10,784,478 B2 and CN 108 352 472 A. US 2010/0227544 discloses a vent member attached to a housing that accommodates automobile components.

### DISCLOSURE€

### Technical Problem

The present disclosure is designed to solve the problems of the related art, and therefore the present disclosure is directed to providing a pack housing including a waterproof and dustproof unit that can reduce man-hours and satisfy waterproof and dustproof performance when applied to a venting hole included in the pack housing, and a battery pack including the pack housing.

The technical problems to be solved in the present disclosure are not limited to the above, and other problems that are not mentioned could be clearly understood by one of ordinary skill in the art from the description of the present disclosure below.

### Technical Solution

**In** one aspect of the present disclosure, there is provided a pack housing including an internal space capable of accommodating battery cells. The pack housing includes a venting hole provided in at least one surface of the pack housing to communicate with the internal space; and a hole cover assembly configured to cover the venting hole, wherein the hole cover assembly includes a filter mesh including a resin filter layer formed of a resin and a mesh integrated with the resin filter layer by insert injection and placed in the venting hole; and a mounting plate provided in the form of a frame having an empty center and coupled to the at least one surface of the pack housing while pressing an edge region of the filter mesh.

The at least one surface may be at least one of a bottom plate forming a bottom surface of the pack housing and a top plate forming a top surface of the pack housing.

The mesh is formed of a metal material and includes a first mesh and a second mesh disposed to face the first mesh a predetermined distance apart from the first mesh, and the resin filter layer is located between the first mesh and the second mesh.

The mesh may further include an outer frame connected to an edge region of the first mesh and an edge region of the second mesh and surrounding the resin filter layer.

The resin filter layer includes a first filter layer and a second filter layer disposed to face the first filter layer a predetermined distance apart from the first filter layer, and the mesh is formed of a metal material, and is located between the first filter layer and the second filter layer.

An edge region of the mesh may extend in a vertical direction to surround the first filter layer and the second filter layer.

The resin filter layer may be made of at least one of a fluororesin, a polyurethane resin, and an epoxy resin.

The pack housing may include a housing main body formed in a hollow structure and having a lower end portion coupled to the bottom plate and an upper end portion provided to be coupled to the top plate.

The bottom plate or the top plate may include a recessed portion recessed along the periphery of the venting hole to be able to mount an edge region of the filter mesh. The recessed portion may include, in its corner region, a column in which a thread is formed along the inner circumferential surface of its inner diameter. The filter mesh may be provided in a form in which a corner area is cut out, and the mounting plate may have a bolt fastening hole in its corner area and may be fixed to the column by a bolt member fitted into the bolt fastening hole.

In another aspect of the present disclosure, there is provided an energy storage system (ESS) battery pack for home use including the above-described pack housing.

### Advantageous Effects

According to an aspect of the present disclosure, provided are a pack housing including an integrated filter mesh that can reduce man-hours and satisfy waterproof and dustproof performance when applied to a venting hole for gas discharge, and a battery pack including the pack housing.

The effects of the present disclosure are not limited to the aforementioned effects, and effects not mentioned will be clearly understood by those of ordinary skill in the art to which the present disclosure belongs from the present specification and the accompanying drawings.

### DESCRIPTION OF DRAWINGS

FIG. 1 is a perspective view of the exterior of a battery pack according to an embodiment of the present disclosure.
FIG. 2 is a perspective view of a bottom plate of a pack housing of FIG. 1.
FIG. 3 is an exploded perspective view of a hole cover assembly according to an embodiment of the present disclosure.
FIG. 4 is a perspective view of a filter mesh of FIG. 3.
FIG. 5 is a cross-sectional view of the filter mesh of FIG. 4 taken along line I-I'.
FIG. 6 is a drawing corresponding to FIG. 5 and is a cross-sectional view of a modification of the filter mesh of FIG. 5.

### MODE FOR DISCLOSURE

Hereinafter, preferred embodiments of the present disclosure will be described in detail with reference to the accompanying drawings. The description proposed herein is just a preferable example for the purpose of illustrations only, not intended to limit the scope of the present disclosure, so it should be understood that other equivalents and modifications could be made thereto without departing from the scope of the present disclosure.

Since embodiments of the present disclosure are provided to more completely explain the present disclosure to those skilled in the art, the shapes and sizes of components in the drawings may be exaggerated, omitted, or schematically illustrated for clearer description. Thus, the size or proportion of each component do not fully reflect an actual size or proportion thereof.

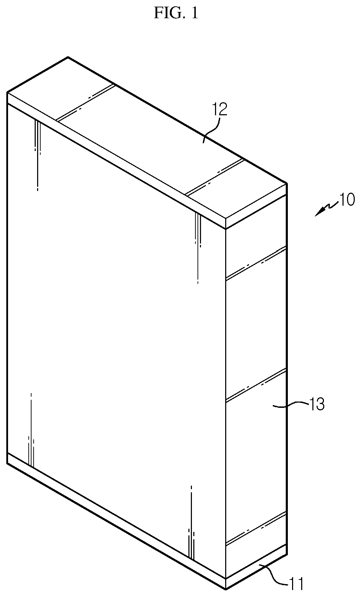

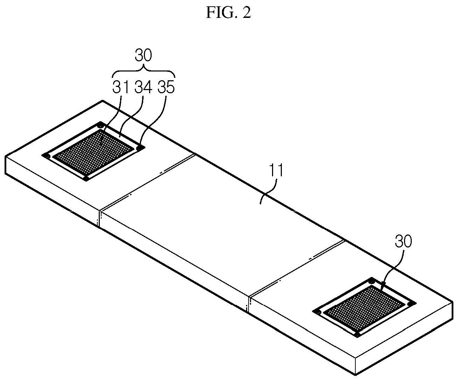

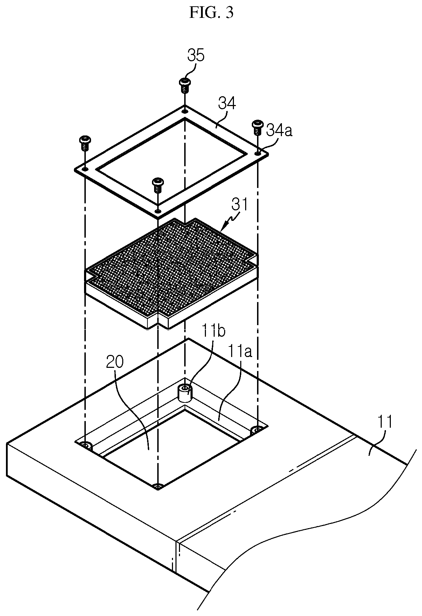

FIG. 1 is a perspective view of the exterior of a battery pack according to an embodiment of the present disclosure, FIG. 2 is a perspective view of a bottom plate of a pack housing of FIG. 1, and FIG. 3 is an exploded perspective view of a hole cover assembly according to an embodiment of the present disclosure.

Referring to FIGS. 1 through 3, an energy storage system (ESS) battery pack for home use according to an embodiment of the present disclosure includes battery cells (not shown), a pack housing 10 accommodating the battery cells, a venting hole 20 provided in at least one surface of the pack housing 10, and a hole cover assembly 30 installed in the venting hole 20.

A lithium ion secondary battery may be employed as each of the battery cells (not shown), and includes an electrode assembly, an electrolyte, and an outer casing that seals the electrode assembly and the electrolyte. Battery cells may be classified into a pouch type, a cylindrical type, and a prismatic type according to the shapes of outer casings, and do not need to be limited to a specific shape.

The electrode assembly is an assembly of an electrode and a separator, and may be configured such that one or more positive electrode plates and one or more negative electrode plates are disposed with a separator interposed therebetween. An electrode tab may be included in each electrode plate of the electrode assembly and may be connected to an electrode lead. For example, in the case of a pouch-type secondary battery, one or more electrode tabs may be connected to an electrode lead. The electrode lead may have one end exposed to the outside by being interposed between pouch outer casings, and thus may function as an electrode terminal.

The configuration of such a pouch-type secondary battery is obvious to those skilled in the art to which the present disclosure pertains, and thus a more detailed description thereof will be omitted. In an ESS battery pack for home use according to the present disclosure, various secondary batteries known at the time of filing of the present disclosure may be employed.

The pack housing 10 may include a bottom plate 11 forming a bottom surface, a top plate 12 forming a top surface, and a housing main body 13 having a hollow structure. The housing main body 13 may be manufactured by extrusion molding, and forms front, rear, and both side surfaces of the pack housing 10.

Although the housing main body 13 is not shown in detail in the drawings, the housing main body 13 may be provided such that a lower end portion of the housing main body 13 may be coupled to the bottom plate 11 by bolting or hooking and an upper end portion of the housing main body 13 may be coupled to the top plate 12 by bolting or hooking.

The pack housing 10 may include an internal space surrounded by the bottom plate 11, the top plate 12, and the housing main body 13, and may protect battery cells and other embedded component parts from external impacts or vibrations by being formed of a metal material having high mechanical rigidity.

The venting hole 20 is a unit for discharging a gas generable by battery cells from the pack housing 10, and one or more venting holes 20 may be provided in at least one surface of the pack housing 10.

According to the present embodiment, the venting hole 20 may be provided in the bottom plate 11. In other words, when the venting hole 20 is provided in the top plate 12 or the housing main body 13, rainwater may flow into the pack housing 10 through the venting hole 20 in rainy weather, and foreign substances or dust may fall and are prone to be accumulated around the venting hole 20.

However, when the venting hole 20 is provided in the bottom plate 11, there is no room for rainwater to flow in through the venting hole 20, and foreign substances or dust do not fall and accumulate around the venting hole 20.

According to the present embodiment, the venting hole 20 is implemented to have a rectangular shape. However, the venting hole 20 does not necessarily have a rectangular shape. If necessary, the venting hole 20 may be configured in various shapes, such as a circle, an ellipse, and a polygon, and various sizes.

The hole cover assembly 30 covers the venting hole 20 to satisfy waterproofing and dustproofing of an ESS battery pack, and is configured to be fixedly coupled to the bottom plate 11.

As shown in FIGS. 2 and 3, the hole cover assembly 30 according to the present embodiment may include a filter mesh 31, a mounting plate 34, and a bolt member 35.

The filter mesh 31 is formed by integrating a resin filter layer 32 formed of a resin with a mesh 33 made of a metal material by insert injection molding. **In** other words, the filter mesh 31 may be formed by putting a pre-fabricated metal mesh 33 in an injection mold and molding a filter layer with a resin. That is, the filter mesh 31 may be a result of taking unique advantages of conventional several waterproof and dustproof units including a mesh 33 and a filter by closely adhering the conventional several waterproof and dustproof units into a single product.

Compared with manufacturing a fiber filter and a mesh separately, laminating and aligning them, and installing a result of the lamination and alignment in the venting hole 20, as the waterproof and dustproof unit mentioned in the last paragraph of the Background Art section, the filter mesh 31 according to the present disclosure is a single product, and thus may be directly installed in the venting hole 20 without stacking and aligning the resin filter layer 32 and the mesh network 33.

Moreover, because the filter mesh 31 is obtained by closely adhering the resin filter layer 32 having low rigidity and the mesh 33 having a somewhat insufficient waterproof function each other, the disadvantage of the resin filter layer 32 and the disadvantage of the mesh 33 may be complemented each other, and thus the filter mesh 31 may have both waterproof and dustproof performance and excellent durability.

The resin filter layer 32 may have a porous structure capable of filtering out micro-sized foreign substances. Resins having excellent heat resistance, such as a fluororesin, a polyurethane resin, and an epoxy resin, may be used as a resin used for molding the resin filter layer 32.

For example, the fluororesin has very excellent properties such as heat resistance, chemical resistance, low temperature resistance, electrical insulation, and high frequency characteristics compared to general plastics. However, the scope of the present disclosure is not limited to the specific types of resin. Resins having various chemical properties, such as resins for suppressing occurrence of fire, may be applied as the resin used for molding the resin filter layer 32.

The mesh 33 interrupts introduction of foreign substances and supports the resin filter layer 32. The mesh 33 may be provided with a hole size less than or equal to 1 mm horizontal × 1 mm vertical. The mesh 33 may be made of a material with good rigidity, such as stainless steel. However, the mesh 33 is not necessarily made of stainless steel, and any material with good heat resistance and good durability may be used.

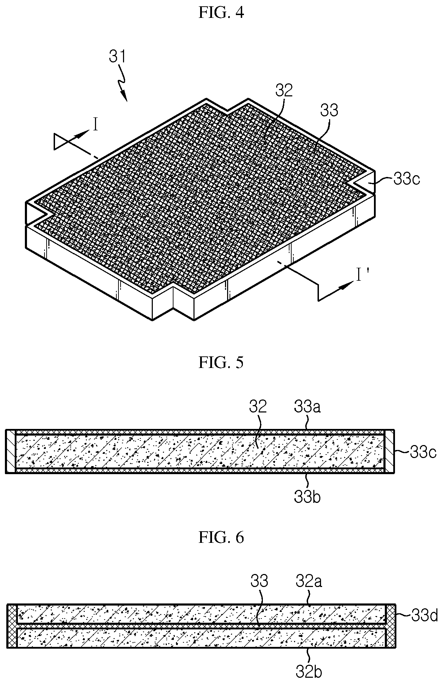

FIG. 4 is a perspective view of the filter mesh of FIG. 3, and FIG. 5 is a cross-sectional view taken along line I-I' of FIG. 4.

Describing the structure of the filter mesh 31 according to the present embodiment in detail with reference to FIGS. 4 and 5, the mesh 33 includes a first mesh 33a, a second mesh 33b, and an outer frame 33c, and the resin filter layer 32 is located between the first mesh 33a and the second mesh 33b.

The first mesh 33a and the second mesh 33b may be provided in the same shape and the same size, and may be configured to face each other at a predetermined distance apart from each other. Respective edge regions of the first mesh 33a and the second mesh 33b may be connected to the outer frame 33c, and thus the first mesh 33a and the second mesh 33b may keep a constant distance therebetween. The resin filter layer 32 may be located between the first mesh 33a and the second mesh 33b and may be surrounded by the outer frame 33c.

According to this structure, the resin filter layer 32 is not easily distorted by strong impacts or heat by being interposed in a space surrounded by the first mesh 33a, the second mesh 33b, and the outer frame 33c.

FIG. 6 is a drawing corresponding to FIG. 5 and is a cross-sectional view of a modification of the filter mesh 31.

In a filter mesh 31 according to a modification of the present embodiment, a resin filter layer is divided into a first filter layer 32a and a second filter layer 32b, and the mesh 33 is located between the first filter layer 32a and the second filter layer 32b.

For example, as shown in FIG. 6, the first filter layer 32a may be located above the mesh 33, and the second filter layer 32b may be located below the mesh 33 to be apart from the first filter layer 32a. The mesh 33 may be configured in an approximately "H" shape such that its edge region 33d extends in a vertical direction to surround the first filter layer 32a and the second filter layer 32b.

According to this structure, the mesh 33 that is relatively rigid acts as a skeleton inside the resin filter layer 32 to prevent deformation of the resin filter layer 32. In addition, a contact surface between the mesh network 33 and the resin filter layer 32 spans a wide area in all directions during insert injection molding, and thus a bonding strength between the two materials may be improved.

The mounting plate 34 is a mediation unit for attaching the filter mesh 31 to the bottom plate 11, and is provided in the form of a frame having an empty center. According to the present embodiment, the mounting plate 34 is provided in the form of a quadrangular frame corresponding to four sides corresponding to the edges of the filter mesh 31 and thus presses the four sides of the filter mesh 31 and is fastened to the bottom plate 11 by bolts.

Referring back to FIG. 3, an assembly of the hole cover assembly 30 and the bottom plate 11 will now be described.

The bottom plate 11 includes a recessed portion 11a recessed along the outer periphery of the venting hole 20 so as to be able to mount the edges of the filter mesh 31. For example, as shown in FIG. 3, the recessed portion 11a may be formed by a predetermined depth from an upper surface of the bottom plate 11 to form a step with the upper surface. The filter mesh 31 is seated on an edge region of the recessed portion 11a and accordingly does not enter the venting hole 20.

The recessed portion 11a includes, in its corner region, a column 11b in which a thread is formed along the inner circumferential surface of its inner diameter. The column 11b is provided such that its height substantially coincides with a thickness of the filter mesh 31. According to the present embodiment, four columns 11b are provided in four places, considering that the mounting plate 34 has a quadrangular frame shape. However, the number of columns 11b and locations of the columns 11b may vary.

The filter mesh 31 is provided in a form in which four corner areas are cut out or indented inwards in order to avoid interference with the four columns 11b. The mounting plate 34 includes, its four corner areas, bolt fastening holes 34a through which bolts may be inserted.

According to this structure, the filter mesh 31 is seated on the recessed portion 11a of the bottom plate 11, and the mounting plate 34 is disposed above the filter mesh 31. At this time, the columns 11b are positioned at the four corner areas of the filter mesh 31, and the bolt fastening holes 34a of the mounting plate 34 coincide with the inner diameters of the columns 11b.

Then, the mounting plate 34 is fixed to the columns 11b by using bolt members 35. At this time, the four sides of the filter mesh 31 are pressed between the recessed portion 11a and the mounting plate 34, and thus the filter mesh 31 may be firmly fixed.

In the assembly structure and the components of the hole cover assembly 30 according to an embodiment of the present disclosure, in an emergency, the gas generated inside the pack housing 10 may be discharged to the outside through the venting hole 20 and the filter mesh 31, and, in normal times, the filter mesh 31 may prevent introduction of moisture or foreign substances into the pack housing 10 through the venting hole 20.

In particular, because the filter mesh 31 is formed by integrating the resin filter layer 32 and the metal mesh 33 into one product by insert injection, the filter mesh 31 is easily assembled when applied to the venting hole 20 and has a reduced thickness required for waterproofing and dustproofing compared with conventional ones.

An ESS battery pack according to the present disclosure may further include various devices for controlling charging and discharging of battery cells, such as a battery management system (BMS), a relay, a current sensor, and a fuse that may be built in the pack housing, in addition to the above-described components.

Meanwhile, although terms indicating directions such as up, down, left, and right are used in the present specification, these terms are only for convenience of description, and it is apparent to those skilled in the art that these terms may vary depending on a position of a target object or a position of an observer.

## Claims

1. A pack housing (10) including an internal space capable of accommodating battery cells, the pack housing (10) comprising:
a venting hole (20) provided in at least one surface of the pack housing (10) to communicate with the internal space; and
a hole cover assembly (30) configured to cover the venting hole (20),
wherein the hole cover assembly (30) comprises:
a filter mesh (31) comprising a resin filter layer (32) formed of a resin and a mesh (33) integrated with the resin filter layer (32) by insert injection, and placed in the venting hole (20); and
a mounting plate (34) provided in a form of a frame having an empty center and coupled to the at least one surface of the pack housing (10) while pressing an edge region of the filter mesh (31),
wherein
the mesh (33) is formed of a metal material, and comprises a first mesh (33a) and a second mesh (33b) disposed to face the first mesh (33a) a predetermined distance apart from the first mesh (33a), and
the resin filter layer (32) is located between the first mesh (33a) and the second mesh (33b),
or
the resin filter layer (32) comprises a first filter layer (32a) and a second filter layer (32b) disposed to face the first filter layer (32a) a predetermined distance apart from the first filter layer (32a), and
the mesh (33) is formed of a metal material, and is located between the first filter layer (32a) and the second filter layer (32b).

2. The pack housing (10) of claim 1, wherein the at least one surface is at least one of a bottom plate (11) forming a bottom surface of the pack housing (10) and a top plate (12) forming a top surface of the pack housing (10).

3. The pack housing (10) of claim 1, wherein the mesh (33) further comprises an outer frame (33c) connected to an edge region of the first mesh (33a) and an edge region of the second mesh (33b) and surrounding the resin filter layer (32).

4. The pack housing (10) of claim 1, wherein an edge region of the mesh (33) extends in a vertical direction to surround the first filter layer (32a) and the second filter layer (32b).

5. The pack housing (10) of claim 1, wherein the resin filter layer (32) is made of at least one of a fluororesin, a polyurethane resin, and an epoxy resin.

6. The pack housing (10) of claim 1, wherein the pack housing (10) comprises a housing main body (13) formed in a hollow structure and having a lower end portion coupled to the bottom plate (11) and an upper end portion provided to be coupled to the top plate (12).

7. The pack housing (10) of claim 1, wherein
the bottom plate (11) or the top plate (12) includes a recessed portion (11a) recessed along a periphery of the venting hole (20) to be able to mount an edge region of the filter mesh (31),
the recessed portion (11a) comprises, in a corner region, a column (11b) in which a thread is formed along an inner circumferential surface of an inner diameter, and
the filter mesh (31) is provided in a form in which a corner area is cut out, and the mounting plate (34) has a bolt fastening hole (34a) in a corner area and is fixed by a bolt member (35) fitted into the bolt fastening hole (34a) and fastened to the column (11b).

8. An energy storage system (ESS) battery pack for home use including the pack housing (10) of any of claims 1 through 7.

## Patentansprüche

1. Packgehäuse (10), umfassend einen inneren Raum, welcher in der Lage ist, Batteriezellen unterzubringen, wobei das Packgehäuse (10) umfasst:
ein Belüftungsloch (20), welches in wenigstens einer Fläche des Packgehäuses (10) bereitgestellt ist, um mit dem inneren Raum zu kommunizieren; und
eine Lochabdeckungsanordnung (30), welche dazu eingerichtet ist, das Belüftungsloch (20) abzudecken,
wobei die Lochabdeckungsanordnung (30) umfasst:
ein Filtergitter (31), welches eine Harzfilterlage (32), welche aus einem Harz gebildet ist, und ein Gitter (33) umfasst, welches mit der Harzfilterlage (32) durch Einlegspritzguss integriert ist, und in dem Belüftungsloch (20) platziert ist; und
eine Anbringungsplatte (34), welche in einer Form eines Rahmens bereitgestellt ist, welcher ein leeres Zentrum aufweist und mit der wenigstens einen Fläche des Packgehäuses (10) gekoppelt ist, während eines Drückens eines Kantenbereiches des Filtergitters (31),
wobei das Gitter (33) aus einem Metallmaterial gebildet ist und ein erstes Gitter (33a) und ein zweites Gitter (33b) umfasst, welches angeordnet ist, um dem ersten Gitter (33a), um einen vorbestimmten Abstand von dem ersten Gitter (33a) entfernt, zugewandt zu sein, und
die Harzfilterlage (32) zwischen dem ersten Gitter (33a) und dem zweiten Gitter (33b) angeordnet ist,
oder
die Harzfilterlage (32) eine erste Filterlage (32a) und eine zweite Filterlage (32b) umfasst, welche angeordnet ist, um der ersten Filterlage (32a), um einen vorbestimmten Abstand von der ersten Filterlage (32a) entfernt, zugewandt zu sein, und
das Gitter (33) aus einem Metallmaterial gebildet ist und zwischen der ersten Filterlage (32a) und der zweiten Filterlage (32b) angeordnet ist.

2. Packgehäuse (10) nach Anspruch 1, wobei die wenigstens eine Fläche wenigstens eine aus einer unteren Platte (11), welche eine untere Fläche des Packgehäuses (10) bildet, und einer oberen Platte (12) ist, welche eine obere Fläche des Packgehäuses (10) bildet.

3. Packgehäuse (10) nach Anspruch 1, wobei das Gitter (33) ferner einen äußeren Rahmen (33c) umfasst, welcher mit einem Kantenbereich des ersten Gitters (33a) und einem Kantenbereich des zweiten Gitters (33b) verbunden ist und welcher die Harzfilterlage (32) umgibt.

4. Packgehäuse (10) nach Anspruch 1, wobei sich ein Kantenbereich des Gitters (33) in einer vertikalen Richtung erstreckt, um die erste Filterlage (32a) und die zweite Filterlage (32b) zu umgeben.

5. Packgehäuse (10) nach Anspruch 1, wobei die Harzfilterlage (32) aus wenigstens einem aus einem Fluorharz, einem Polyurethanharz und einem Epoxidharz hergestellt ist.

6. Packgehäuse (10) nach Anspruch 1, wobei das Packgehäuse (10) einen Gehäusehauptkörper (13) umfasst, welcher in einer hohlen Struktur gebildet ist und einen unteren Endabschnitt, welcher mit der unteren Platte (11) gekoppelt ist, und einen oberen Endabschnitt aufweist, welcher bereitgestellt ist, um mit der oberen Platte (12) gekoppelt zu werden.

7. Packgehäuse (10) nach Anspruch 1, wobei
die untere Platte (11) oder die obere Platte (12) einen vertieften Abschnitt (11a) umfasst, welcher entlang eines Umfangs des Belüftungslochs (20) vertieft ist, um in der Lage zu sein, einen Kantenbereich des Filtergitters (31) zu befestigen,
der vertiefte Abschnitt (11a) in einem Eckbereich eine Stütze (11b) umfasst, in welche ein Gewinde entlang einer inneren Umfangsfläche eines inneren Durchmessers gebildet ist, und
das Filtergitter (31) in einer Form bereitgestellt ist, in welcher ein Eckbereich ausgeschnitten ist, und die Anbringungsplatte (34) ein Bolzenbefestigungsloch (34a) in einem Eckbereich aufweist und durch ein Bolzenelement (35) fixiert ist, welches in das Bolzenbefestigungsloch (34a) eingepasst ist und an der Stütze (11b) befestigt ist.

8. Energiespeichersystem-(ESS)-Batteriepack für einen Heimgebrauch, welcher das Packgehäuse (10) nach einem der Ansprüche 1 bis 7 umfasst.

## Revendications

1. Boîtier de bloc (10) incluant un espace interne apte à accueillir des éléments de batterie, le boîtier de bloc (10) comprenant :
un trou d'aération (20) ménagé dans au moins une surface du boîtier de bloc (10) pour communiquer avec l'espace interne ; et
un ensemble couvercle de trou (30) configuré pour recouvrir le trou d'aération (20), dans lequel l'ensemble couvercle de trou (30) comprend :
un treillis de filtre (31) comprenant une couche filtrante de résine (32) formée d'une résine et un treillis (33) intégré à la couche filtrante de résine (32) par injection d'insert, et placé dans le trou d'aération (20) ; et
une plaque de montage (34) présente sous forme de cadre présentant un centre vide et couplée à l'au moins une surface du boîtier de bloc (10) tout en appuyant sur une région périphérique du treillis de filtre (31),
dans lequel
le treillis (33) est formé d'un matériau métallique, et comprend un premier treillis (33a) et un second treillis (33b) disposé pour faire face au premier treillis (33a) à une distance prédéterminée du premier treillis (33a), et
la couche filtrante de résine (32) est située entre le premier treillis (33a) et le second treillis (33b),
ou
la couche filtrante de résine (32) comprend une première couche filtrante (32a) et une seconde couche filtrante (32b) disposée pour faire face à la première couche filtrante (32a) à une distance prédéterminée de la première couche filtrante (32a), et
le treillis (33) est formé d'un matériau métallique, et est situé entre la première couche filtrante (32a) et la seconde couche filtrante (32b).

2. Boîtier de bloc (10) selon la revendication 1, dans lequel l'au moins une surface est au moins une parmi une plaque inférieure (11) formant une surface inférieure du boîtier de bloc (10) et une plaque supérieure (12) formant une surface supérieure du boîtier de bloc (10).

3. Boîtier de bloc (10) selon la revendication 1, dans lequel le treillis (33) comprend en outre un cadre extérieur (33c) relié à une région périphérique du premier treillis (33a) et à une région périphérique du second treillis (33b) et entourant la couche filtrante de résine (32).

4. Boîtier de bloc (10) selon la revendication 1, dans lequel une région périphérique du treillis (33) s'étend dans une direction verticale pour entourer la première couche filtrante (32a) et la seconde couche filtrante (32b).

5. Boîtier de bloc (10) selon la revendication 1, dans lequel la couche filtrante de résine (32) est constituée d'au moins une parmi une fluororésine, une résine de polyuréthane et une résine époxy.

6. Boîtier de bloc (10) selon la revendication 1, dans lequel le boîtier de bloc (10) comprend un corps principal de boîtier (13) formé en une structure creuse et présentant une partie d'extrémité inférieure couplée à la plaque inférieure (11) et une partie d'extrémité supérieure conçue pour être couplée à la plaque supérieure (12).

7. Boîtier de bloc (10) selon la revendication 1, dans lequel
la plaque inférieure (11) ou la plaque supérieure (12) inclut une partie encastrée (11a) encastrée le long d'une périphérie du trou d'aération (20) pour permettre le montage d'une région périphérique du treillis de filtre (31),
la partie encastrée (11a) comprend, dans une région d'angle, une colonne (11b) dans laquelle un filetage est formé le long d'une surface circonférentielle intérieure d'un diamètre intérieur, et
le treillis de filtre (31) est fourni sous une forme dans laquelle une zone d'angle est découpée, et la plaque de montage (34) présente un trou de fixation (34a) de boulon dans une zone d'angle et est fixée par un élément de boulon (35) inséré dans le trou de fixation (34a) de boulon et fixé à la colonne (11b).

8. Bloc-batterie de système de stockage d'énergie (ESS) à usage domestique incluant le boîtier de bloc (10) selon l'une quelconque des revendications 1 à 7.
